# EUROPEAN PATENT SPECIFICATION

(11) **EP 2 215 581 B1**
(45) Date of publication and mention of the grant of the patent: **14.06.2017**
(21) Application number: 08871683.2
(22) Date of filing: 06.10.2008
(51) Int. Cl.: G06F 21/00

(54) **METHOD OF LOCATING INFORMATION CONTENT WITH LIMITED ACCESS IN THE SECURE STORAGE UNIT OF A COMMUNICATION DEVICE**
VERFAHREN ZUM LOKALISIEREN VON INFORMATIONEN MIT BESCHRÄNKTEM ZUGRIFF IM SICHEREN SPEICHER EINES KOMMUNIKATIONSGERÄTS
PROCÉDÉ DE POSITIONNEMENT D'UN CONTENU D'INFORMATION À ACCÈS RESTREINT DANS L'UNITÉ DE MÉMOIRE STABLE D'UN DISPOSITIF DE COMMUNICATION

(30) Priority: 20.10.2007 HU 0700685
(43) Date of publication of application: 11.08.2010
(73) Proprietor: Vilmos, András, 1026 Budapest (HU); Párkányi, Péter, 1112 Budapest (HU)
(72) Inventor: Vilmos, András, 1026 Budapest (HU); Párkányi, Péter, 1112 Budapest (HU)
(74) Representative: Kacsuk, Zsófia
(86) International application number: PCT/HU2008/000114
(87) International publication number: WO 2009/095724

(56) References cited:
- EP-A- 1 069 539
- US-A1- 2002 053 090
- US-B1- 6 259 791

## Description

The present invention relates to a procedure for establishing a uniquely accessible storage area and to a procedure for installing uniquely accessible data content in a secure storage part-unit managed by an external controlling partner. The invention further relates to a communication device containing a secure storage part-unit.

The subject of the invention relates to a procedure for the establishment of uniquely accessible storage area for receiving information which storage area is to be located in the secure storage part-unit of a communication device, during which data exchange is performed with the help of a communication device that has a central unit and a secure storage part-unit, containing at least one storage register, which is linked to it, as a result of which a new uniquely accessible storage area is created in the secure storage part-unit of the communication device, and we ensure access for the service provider to it.

The subject of the invention also relates to a procedure for the locating of information content in the secure storage part-unit of a communication device, during which with the help of a communication device that has a central unit and a secure storage part-unit, containing at least one storage register, which is linked to it, data exchange is performed with a service provider, as a result of which new uniquely accessible information content is installed in the secure storage part-unit of the communication device, and we ensure access for the service provider to it.

As a result of the development of communication devices, especially mobile telephone sets, as well as chip-cards, an increasing number and wide range of services have become available for users on the communication devices. Some of the services are already contained in the basic construction of the communication device, but information contents realising services also exist which, in a given case, need to be or are preferably downloaded afterwards to the user's communication device on the basis of the choice of the user, and, due to security considerations, this is done into its protected storage unit.

However, according to the present state of the art in general the entire storage area of the secure storage suitable for receiving such information content is linked to a single person, and is essentially under this person's supervision. However, this circumstance is disadvantageous for both the service providers of the communication devices and their users. As the given secure storage part-unit is not used appropriately and as required in a significant proportion of the cases. The secure storage part-unit placed in the communication device consists, in general, of a unified storage area, or if, in spite of this, part areas separated from each other are established, these are partitioned by the manufacturer itself during the chip-card manufacturing process, and after this neither the service provider not even the user is able to reformat it. This practice may cause the entire card capacity or certain storage areas to be unused, as during manufacture it is not possible to know the real commercial demands relating to the given services, and in this way unused applications are placed on the card, while in a given case the services that users look for are not placed there.

US 2002/053090 discloses a data receiving apparatus having a storage unit wherein an exclusive-memory-area can be secured for a service provider, such as a broadcasting provider. However, the exclusive-memory-area is secured (or deleted) by a program operating on the data receiving apparatus. Because the exclusive memory area is managed locally and there is no external controlling party the exclusive memory area is more prone to tampering, which renders it unsuitable for use in combination with services where high security is required.

With the solution according to the invention our objective was to terminate the unfavourable utilisation practices of the secure storage part-units placed in the communication devices, and to create procedures with the use of which uniquely accessible storage areas serving to receive various information content can be dynamically created after the card has been manufactured and put into distribution or terminated as required, and in such a way that the initiator of the creation of the new areas and the issuer of the primary data required for this may be the user of the communication device him/herself, and that he/she may use his/her own communication device for the implementation of the procedure.

The objective was, furthermore, to be able to install information content onto a certain well-defined part of a determined storage area of the secure storage part-unit, with the content service providers with various information content isolated from each other and isolated from the card owner so that the data and information required for this, within an appropriate security framework, is provided for them in the simplest form and with the simplest of access.

What is more, another objective was for the secure installation of the uniquely accessible information content initiated by the user of the communication device to be realisable even if the secure storage part-unit may only be treated as a single unit.

The recognition that led to the procedure according to the invention was that if we place the direct or indirect, e.g. searchable in a database, contact information of the card manufacturer or controlling partner in a determined data group of the secure storage part-unit and using this data and we inform the controlling partner of information relating to the device and/or running environment and/or user and/or content service provider, then after the manufacture of the chip card and its delivery to the user it becomes possible to set up the uniquely accessible storage areas of the secure storage part-unit subsequently, and, furthermore, to authorise access to the uniquely accessible storage area created for a determined party, e.g. service provider, and so the task may be solved.

The recognition also included that with the unique location of suitably selected data elements and the novel use of coding solutions it may also be achieved that we create one or more determined uniquely accessible storage areas via a remote communication connection in such a way that only the party or parties designated by the user of the communication device loading the information content there have access to it and in this way the desired and required level of data protection can be suitably solved.

The idea behind the invention also included the recognition that if we create data packets with the appropriate content and we forward them in a suitable way to a suitable location, then uniquely accessible information content may be located in a single undivided secure storage part-unit, to which only the designated parties have access, and so in this way also the task may be solved.

In accordance with the set aim the procedure according to the invention for the establishment of uniquely accessible storage area for receiving information which storage area is to be located in the secure storage part-unit of a communication device, - during which data exchange is performed with the help of a communication device that has a central unit and a secure storage part-unit, containing at least one storage register, which is linked to it, as a result of which a new uniquely accessible storage area is created in the secure storage part-unit of the communication device, and we ensure access for the service provider to it - on the principle that for the establishment of the uniquely accessible storage area serving to receive the information content we set up a data packet starting from information recorded suitable for the identification of the secure storage unit and from supplementary information, then the initial data packet is forwarded to the service provider providing the supervision for the information content, at the service provider the initial data packet is tested, during which using the initial data packet the contact information of the controlling partner of the given secure storage part-unit is identified, following this a position request data packet is sent to the controlling partner of the given secure storage part-unit or to its agent, in which position request data packet at least the data suitable for the identification of the given secure storage part-unit appear, we interpret the position request data packet arriving at the controlling partner of the given secure storage part unit or at its agent, then according to the result of the interpretation the uniquely accessible storage area is created in the given secure storage part-unit, and then we inform the service provider regarding the existence of the uniquely accessible storage area and send to it the access data packet which ensures access.

A further feature of the procedure according to the invention may be that the contact information of the controlling partner of the given secure storage part-unit is determined directly from the initial data packet.

In the case of a further embodiment of the procedure the contact information of the controlling partner of the given secure storage part-unit is determined from a remote database using the information appearing in the initial data packet as an address.

In the case of another, different embodiment of the procedure supplementary information suitable for the identification of the communication device coupled with the secure storage part-unit and/or the user of the communication device and/or the service provider is contained in the initial data packet.

Also in harmony with the objective another procedure according to the invention for the establishment of a uniquely accessible storage area for the locating of information content located in the secure storage part-unit of a communication device, - during which data exchange is performed with the help of a communication device that has a central unit and a secure storage part-unit, containing at least one storage register, which is linked to it, as a result of which a new uniquely accessible storage area is created in the secure storage part-unit of the communication device, and we ensure access for to it for the so authorised party - on the principle that a position request data packet is set up consisting of information recorded suitable for the identification of the given secure storage part-unit for the creation of the uniquely accessible storage area serving to receive the information content and of supplementary information, then the position request data packet is sent to the controlling partner of the given secure storage part-unit or to its agent, at the controlling partner or its agent the position request data packet is interpreted, then according to the result of the interpretation the uniquely accessible storage area is created in the given secure storage part-unit, then the operator of the portable communication device or another party determined by him/her is informed of the creation of the uniquely accessible storage area, and then the access data packet ensuring access is sent to him/her.

From the point of view of the procedure it may be favourable if position data relating to the size of the uniquely accessible storage area to be created as well as, in a given case, supplementary information suitable for the identification of the communication device and/or the service provider is included in the position request data packet, furthermore, if on the basis of the position data appearing in the position request data packet and relating to the size of the uniquely accessible storage area, a uniquely accessible storage area of the prescribed size is delimited in the secure storage part-unit.

Also in accordance with the set aim, the procedure according to the invention for the locating of information content in the secure storage part-unit of a communication device, - during which data exchange is performed with the service provider with the help of a communication device that has a central unit and a secure storage part-unit, containing at least one storage register, which is linked to it, as a result of which new uniquely accessible information content is installed in the secure storage part-unit of the communication device, and we ensure access for the service provider to it, - based on the principle that an initial data packet is created from information recorded suitable for the identification of the given secure storage part-unit and from supplementary information for the locating of the uniquely accessible information content, then the initial data packet is forwarded to the service provider performing the supervision of the data content, at the service provider the initial data packet is tested, during which using the initial data packet the contact information of the controlling partner of the given secure storage part-unit is identified, following this a position request data packet is sent to the controlling partner of the given secure storage part-unit or to its agent, in which position request data packet at least the data suitable for the identification of the given secure storage part-unit appear, we interpret the position request data packet arriving at the controlling partner of the given secure storage part unit or at its agent, then according to the result of the interpretation the uniquely accessible data content is located in the given secure storage part-unit, and then we inform the service provider regarding the locating of the uniquely accessible information content and send to it the access data packet which ensures access.

In the case of a still further embodiment of the invention the recorded information includes at least a character series identifying the given secure storage part-unit and/or a character series identifying the communication device and/or a character series that may be used for the identification of the controlling partner and/or a character series identifying the user of the communication device, while the supplementary information includes at least a character series that may be used for the identification of the controlling partner and/or a character series identifying the user of the communication device, and/or a character series identifying the communication device and/or a character series identifying the given secure storage part-unit.

During a still different execution of the procedure we use an information forwarding network or an interface supporting direct data communication for the communication carried out with the service provider performing the supervision of the information content and/or with the controlling partner of the given secure storage part-unit, and so for the forwarding of the initial data packet and/or the position request data packet.

In the case of an advantageous embodiment of the invention we use a CPLC character group for the identification of the secure storage part-unit and/or of the associated controlling partner, furthermore, the data relating to the contact data of the controlling partner belonging to the secure storage part-unit is stored in the information network identifier located in the secure storage part-unit.

In the case of a possible realisation of the procedures the service provider and the controlling partner are the same party.

The most important advantage of the procedures according to the invention is that in the case they are used it becomes possible to subsequently re-format or just format the storage area of the secure storage part-unit, even many times, and with this to create independent storage areas separated from each other in such a way that the required data exchange between partners that are unknown to one another becomes possible with simple logistic support, without any separate administration operations.

An advantage deriving from this is that an entire secure storage part-unit becomes usable by completely independent content service providers, and the information content - even without the direct physical connection between the participants - is in all cases downloadable to storage area that is uniquely accessible, closed to other parties. So the use of the secure storage part-unit may be optimal, which from the point of view of the user makes it possible to access and use several applications.

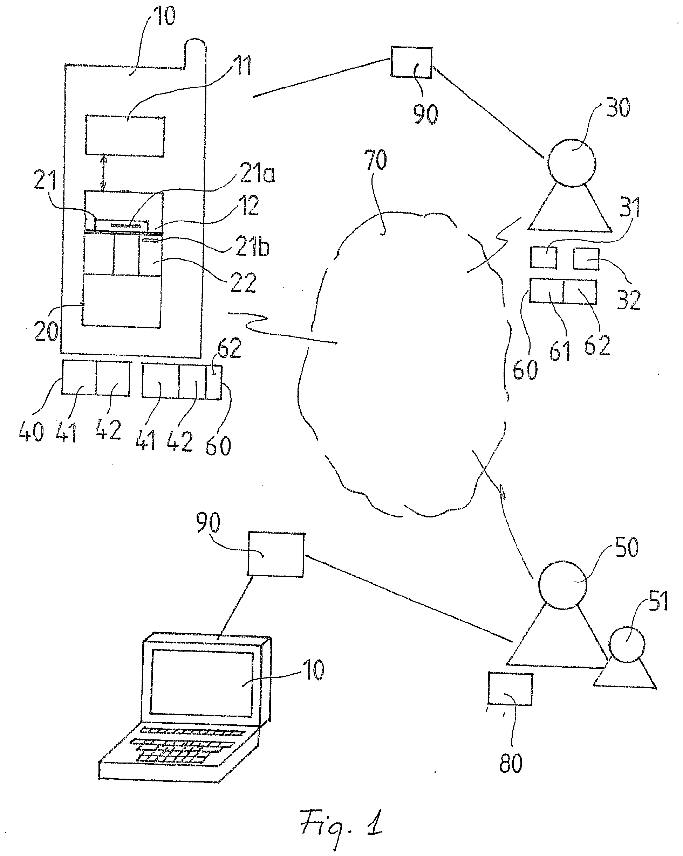

In the following the set of equipment used for the procedure according to the invention is presented in more detail on the basis of exemplary embodiments and drawings. On the drawing
Figure 1 shows the block diagram of a possible embodiment of the set of equipment used during the procedure.

Figure 1 shows the outlined arrangement of devices with the help of which the procedure according to the invention may be realised. Two communication devices 10 can be seen, one of them being a mobile telephone set, while the other one is a portable mini-computer. The individual communication devices 10 may be connected by an information forwarding network 70 and/or an interface 90 to the service provider 30 and/or controlling partner 50, and in a given case the controlling partner 50 with its agent 51.

The mobile telephone set serving as communication device 10 comprises a central unit 11, which controls the operation of the communication device 10, and the secure storage part-unit 20 which is connected to the central unit 11, and, furthermore, an other storage area 12. The other storage area 12 comprises a storage register 21, while the secure storage part-unit 20 contains a uniquely accessible storage area 22 to be created according to the procedure.

In the present case the storage register 21 contains the first encryption key 21a, while the other encryption key 21b is located in the uniquely accessible storage area 22. The first encryption key 21a and the other encryption key 21b together form a key pair. Naturally it can be imagined that the first encryption key 21a and the other encryption key 21b are different to one another. This is an asymmetric key pair. But it is possible that the first encryption key 21a and the other encryption key 21b are the same. In this case the key pair is symmetric. An external encryption key 32 is located in the other storage area 12, which, belongs to the service provider 30, and during the procedure it can be loaded into the other storage area 12 via the information forwarding network 70.

In a given case the external encryption key 32 and the first encryption key 21a may also be located in the secure storage part-unit 20.

An initial data packet 40 is also associated with the communication device 10, which contains recorded information 41 and supplementary information 42. The recorded information 41 and the supplementary information 42 is a mass of data that may be forwarded either on the information forwarding network 70 or via the interface 90 to the service provider 30 or even the controlling partner 50.

The recorded information 41 or supplementary information 42 of the initial data packet 40 contains the direct or indirect contact information of the controlling partner 50, its information network identifier, and it may include information suitable for the identification of the communication device 10 and the service provider 30, furthermore, it may contain character series identifying the secure storage part-unit 20 and character series identifying the user of the communication device 10.

The task of this initial data packet 40 is to make it clearly determinable during the procedure which secure storage part-unit 20 the uniquely accessible storage area 22 is to be created on and who or which controlling partner 50 is able to perform this.

Here we must remark that the identification of the controlling partner 50 need not necessarily be carried out directly. A solution may be also imagined where the controlling partner 50 is only represented by a so-called "pointer", which, for example, points to a given element of a remotely accessible computer database, and this element contains the real direct contact details of the controlling partner 50

The procedure also contains a solution for the data relating to the controlling partner 50 stored in the remotely accessible database to result in correct information even in the case the person of the controlling partner 50 changes. Accordingly in the case of the change of the controlling partner 50 with control over the given secure storage part-unit 20, the previous controlling partner 50 initiates an update in the database performing the identification of the controlling partner 50 of the given secure storage part-unit 20, and places the secure storage part-unit 20 into a temporary status for the purpose of changing the access rights of the secure storage part-unit 20, and at the same time makes it possible for the new controlling partner 50 of the given secure storage part-unit 20 to take over the access authorisation of the secure storage part-unit 20, then the new controlling partner 50 updates the access authorisation of the secure storage part-unit 20 and the activation of the identifier pointing to the new controlling partner 50 takes place in the database serving to identify the controlling partner 50 of the given secure storage part-unit 50.

An access data packet 80 is associated with the controlling partner 50, which access data packet 80 means that group of information with the use of which the required uniquely accessible storage area 22 or uniquely accessible information content on the secure storage part-unit 20 of the communication device 10 becomes accessible.

Besides the external encryption key 32 the service provider 30 has a coded data packet 31, which is required for the personalisation of the given uniquely accessible storage area 22 of the secure storage part-unit 20, and in a given case includes the information content required by the user of the communication device 10 in such a secure form that it cannot be interpreted by unauthorised persons. Also associated with the service provider 30 is the position request data packet 60, which may contain identifying data 61 and the position data 62. The identifying data 61 includes that information with the help of which the determined secure storage part-unit 20 can be clearly identified, or possibly found, while the position data 62 is a data element relating to the size of the uniquely accessible storage area 22 to be created.

In the following the procedures according to the invention are presented in more detail through examples.

### Example 1:

In this embodiment of the procedure according to the invention the goal was to create a uniquely accessible storage area 22 in a 256 Kb secure storage part-unit 20 of a communication device 20 in order to receive information content including a mobile wallet handling application. In accordance with this using the communication device 10 we created an initial data packet 40, the recorded information 41 of which we included to be the direct contact information of the manufacturer of the secure storage part-unit 20, that is of the controlling partner 50, furthermore information suitable for the identification of the secure storage part-unit 20, while the supplementary information 42 was the identification data of the communication device 10.

After the initial data packet 40 had been put together using the communication device 10 it was sent to the service provider 30 operating the mobile wallet handling application through the information forwarding network 70. After receiving the initial data packet 40 at the service provider 30 using the recorded information 41 and the supplementary information 42 the application relating to the request of the requesting party, the communication device 10 and the secure storage part-unit 20 were identified, furthermore, the contact information of the controlling partner 50 which controls the secure storage part-unit 20 was also determined.

Following this the service provider's 30 position request data packet 60 we set up, which included as data 61 the identification data of the secure storage part-unit 20 and the identification of the communication device 10 which contains the secure storage part-unit 20, as well as the identifier of the service provider 30. After this the position request data packet 60 was forwarded to the controlling partner 50 also through the information forwarding network 70, where the content of the position request data packet 60 was examined.

After analysing the position request data packet 60 the secure storage part-unit 20 on which the uniquely accessible storage area 22 had to be made was identified, and following this on the basis of this a group of instructions were forwarded to the communication device 10 containing the given secure storage part-unit 20 with which the uniquely accessible storage area 22 was created there.

Together with the creation of the uniquely accessible storage area 22 the service provider 30 was informed of the creation of the requested uniquely accessible storage area 22 through the information forwarding network 70, and the access data packet 80 containing the access parameters authorising operations on the uniquely accessible storage area 22 sent to the service provider 30. With this on the communication device 10 a uniquely accessible storage area 22 requested by the user of the communication device 10 but only accessible by the service provider 30 was created in the given secure storage part-unit 20 of the determined communication device 10.

### Example 2:

In the case of this embodiment of the procedure according to the invention, as opposed to that presented in the previous procedure, the contact details of the controlling partner 50 was determined first on the basis of the data stored in the secure storage part unit 20 located in the palmtop communication device 10.

In order to acquire this data, from the information placed in the secure storage part-unit 20 a determined section of a database was reached - containing the data of a business organisation dealing with the supervision of numerous secure storage part-units 20 -, from which the direct contact details of the manufacturer appearing as the controlling partner 50 of the given secure storage part-unit 20 were acquired. In the possession of this information a position request data packet 60 was created from the recorded information 41 suitable for identifying the secure storage part-unit 20 and from the supplementary information 42 identifying the communication device 10, furthermore, from the location data of the uniquely accessible storage area 22 of the required size on the secure storage part-unit 20, furthermore, from the details of the service provider 30 producing the information content to be installed onto the requested uniquely accessible storage area 22.

The position request data packet 60 was forwarded via the interface 90 directly to the controlling partner 50, where after the analysis of the given information group, a uniquely accessible storage area 22 of the required size was created on the secure storage part-unit 20 of the communication device 10 and the service provider 30 was informed of this fact via the information forwarding network 70, and at the same time the access data packet 80 was sent to it. So finally a uniquely accessible storage area 22 has been created on the secure storage part-unit 20 of the communication device suitable for receiving the information content offered by the service provider 30 which was not partitioned on the secure storage part-unit 20 when the communication device 10 was sold.

### Example 3:

In the case of the present procedure version we made it possible to protect the uniquely accessible storage area 22 established on the secure storage part-unit of the given communication device 10 in the following way. We must emphasise that the procedure according to the invention is independent of what other procedural steps were used to make the uniquely accessible storage area 22 of the secure storage part-unit 20. So a solution may be imagined in which we ourselves create the various uniquely accessible storage areas 22 on the secure storage part-unit 20 of the given communication device 10 in such a way that we acquire the access data packet 80 required for this from the controlling partner 50 itself, or we could even make the required data packet ourselves.

As a first step we installed the other encryption key 21b onto the uniquely accessible storage area 22 destined to receive the information content of the service provider 30, then we placed the first encryption key 21a onto the other storage area 12 of the communication device 10, and so we prepared data exchange that may be protected with asymmetric keys - in the present case-consisting of the first encryption key 21a and the other encryption key 21b. Following this we requested the external encryption key 32 from the service provider 30 providing the given information content and downloaded it to the other storage area 12 of the communication device 10.

Using the central unit 11 and the external encryption key 32 located on the other storage area 12 we encrypted the first encryption key 21a located on the other storage area 12 of the communication device 10 as well as the data describing the given secure storage part-unit and sent them to the service provider 30 via the information forwarding network 70 in this form. At the service provider 30 with the help of the received first encryption key 21a we encrypted the information content produced by it, and in this way made a coded data packet 31. Then we downloaded the coded data packet 31 also using the information forwarding network to the uniquely accessible storage area 22 of the secure storage part-unit 20 of the designated communication device 10. On the uniquely accessible storage area 22 we decode the coded data packet 31 that has arrived using the other encryption key 21b, and so on the given uniquely accessible storage area 22 we have made it possible for the service provider 30 to personalise the designated storage area.

### Example 4:

We proceeded in the same way as in the case of the previous version, with the difference that the first encryption key 21a and the other encryption key 21b are the same, and so the encryption was carried out using symmetric keys.

### Example 5:

In this version of the procedure we proceeded similarly to the previous examples with the difference that we did not create uniquely accessible storage areas in the secure storage part unit 20, but when the required information content is downloaded we make it possible for only the authorised party to have access to the information content using a suitably selected encryption key.

On the basis of the presented arrangement and procedural examples it can be seen that the procedures according to the invention in the case of any communication device may be used for the subsequent designation, transformation of the uniquely accessible storage areas of the secure storage part-unit fitted into communication devices, and for securely loading information content into these uniquely accessible storage areas, or they may also be used for locating information content onto common storage places but permitting individual access.

## Claims

1. Procedure for the locating of information content of a service provider in a secure storage part-unit (20) of a communication device (10) having a central unit (11) and said secure storage part-unit (20); the procedure includes performing data exchange with the service provider (30) with the help of the communication device as a result of which a new uniquely accessible information content (22) is located in the secure storage part-unit (20) of the communication device (10); and providing access to the uniquely accessible information content (22) for the service provider, **characterised by** the steps of:
- setting up an initial data packet (40) from recorded information (41) comprising identification data of the secure storage part-unit (20) and data for contacting a controlling partner (50) of the secure storage part-unit (20) over an information forwarding network (70) as well as from supplementary information (42),
- sending the initial data packet (40) from the communication device (10) to the service provider (30) performing the supervision of the information content;
- examining the initial data packet (40) at the service provider (30), during which using the initial data packet (40) the contact information of the controlling partner (50) of the given secure storage part-unit (20) is identified,
- setting up a position request data packet (60) including as data (61) the identification data of the given secure storage part-unit (20)
- sending a position request data packet (60) from the service provider to the controlling partner (50) of the given secure storage part-unit (20) or to its agent (51) over the information forwarding network (70);
- examining the position request data packet (60) arriving at the controlling partner (50) of the given secure storage part unit (20) or at its agent (51) and identifying the secure storage part-unit (20),
- based on the identification of the secure storage part-unit forwarding a group of instructions to the communication device (10) over the information forwarding network (70) and thereby installing the uniquely accessible information content (22) in the given secure storage part-unit (20), and
- informing the service provider (30) of the installing of the uniquely accessible information content (22) and sending an access data packet (80) to the service provider (30).

2. The procedure according to claim 1, **characterised by** determining the contact information of the controlling partner (50) of the given secure storage part-unit (20) directly from the initial data packet (40).

3. The procedure according to claim 1, **characterised by** determining the contact information of the controlling partner (50) of the given secure storage part-unit (20) from a remote database using the information appearing in the initial data packet (40) as an address.

4. The procedure according to any of claims 1-3, **characterised by** that supplementary information (42) suitable for the identification of the communication device (10) coupled with the secure storage part-unit (20) and/or the user of the communication device (10) and/or the service provider (30) is contained in the initial data packet (40).

5. Procedure for the establishment of a uniquely accessible storage area (22) for the locating of information content located in a secure storage part-unit (20) of a communication device (10) having a central unit (11) and said secure storage part-unit (20), the procedure including performing data exchange with another party with the help of the communication device (10) as a result of which a new uniquely accessible storage area (22) is created in the secure storage part-unit (20) of the communication device (10), and providing access to the uniquely accessible storage area (22) for the so authorised party, **characterised by** the steps of:
- setting up a position request data packet (60) from recorded information (41) suitable for the identification of the given secure storage part-unit (20) and from supplementary information (42) for the creation of the uniquely accessible storage area (22) serving to receive the information content, then
- sending the position request data packet (60) to the controlling partner (50) of the given secure storage part-unit (20) or to its agent (51) over an information forwarding network (70) using recorded information comprising data for contacting the controlling partner (50),
- examining the position request data packet (60) at the controlling partner (50) or its agent (51) and identifying the secure storage part-unit (20),
- based on the identification of the secure storage part-unit forwarding a group of instructions to the communication device (10) over the information forwarding network (70) and thereby creating the uniquely accessible storage area (22) in the given secure storage part-unit (20),
- informing the operator of the portable communication device (10) or another party determined by the operator of the creation of the uniquely accessible storage area (22), and sending the operator or the other party an access data packet (80).

6. The procedure according to any of claims 1-5, **characterised by** the uniquely accessible information content being located by creating a uniquely accessible storage area (22) and including in the position request data packet (60) position data (62) relating to the size of the uniquely accessible storage area (22) to be created and preferably supplementary information (42) suitable for the identification of the communication device (10) and/or the service provider (30).

7. The procedure according to claim 6, **characterised by** delimiting - on the basis of the position data (62) appearing in the position request data packet (60) and relating to the size of the uniquely accessible storage area (22) - a uniquely accessible storage area (22) of the prescribed size in the secure storage part-unit (20).

8. The procedure according to claim 1, wherein the uniquely accessible information content is located by creating a uniquely accessible storage area (22) for the location of the uniquely accessible information content.

9. Any of the procedures according to claims 1-8, **characterised by** that the recorded information (41) includes at least a character series identifying the given secure storage part-unit (20) and/or a character series identifying the communication device (10) and/or a character series that may be used for the identification of the controlling partner (50) and/or a character series identifying the user of the communication device (10).

10. Any of the procedures according to claims 1-9, **characterised by** that the supplementary information (42) includes at least a character series that may be used for the identification of the controlling partner (50) and/or a character series identifying the user of the communication device (10), and/or a character series identifying the communication device (10) and/or a character series identifying the given secure storage part-unit (20).

11. Any of the procedures according to claims 1-10, **characterised by** using an information forwarding network (70) for the communication carried out with the service provider (30) performing the supervision of the information content and/or with the controlling partner (50) of the given secure storage part-unit (20) or its agent (51), and so for the forwarding of the initial data packet (40) and/or the position request data packet (60).

12. Any of the procedures according to claims 1-10, **characterised by** using an interface (90) supporting direct data communication for the communication carried out with the service provider (30) performing the supervision of the information content and/or with the controlling partner (50) of the given secure storage part-unit (20) or its agent (51), and so for the forwarding of the initial data packet (40) and/or the position request data packet (60).

13. Any of the procedures according to claims 1-12, **characterised by** that the contact data relating to the controlling partner (50) belonging to the secure storage part-unit (20) is stored in the information network identifier located in the secure storage part-unit (20).

14. Communication device implementing all steps relating to the communication device of any one of the procedures according to claims 1 to 13, the communication device (10) having a central unit (11) and a secure storage part-unit (20), **characterised by** that recorded information (41) and supplementary information (42) are stored on the communication device (10), the recorded information (41) comprising data suitable for the identification of the secure storage part-unit (20) and comprising data for contacting the controlling partner (50) of the given secure storage part-unit (20) over an information forwarding network and the supplementary information (42) comprising data for identifying the communication device (10), and the communication device (10) is adapted to:
- use the recorded information (41) and the supplementary information (42) for creating a data packet (40, 60), and
- send the data packet (40, 60) to an addressee chosen from the group consisting of service provider (30), controlling partner (50) and its agent (51).

## Patentansprüche

1. Verfahren zum Lokalisieren von Informationsinhalt eines Dienstleisters in einer sicheren Speicher-Teileinheit (20) einer Kommunikationsvorrichtung (10) mit einer Zentraleinheit (11) und der sicheren Speicher-Teileinheit (20); wobei das Verfahren umfasst Ausführen von Datenaustausch mit dem Dienstleister (30) mit der Hilfe von der Kommunikationsvorrichtung, als ein Ergebnis dessen ein neuer exklusiv zugänglicher Informationsinhalt (22) in der sicheren Speicher-Teileinheit (20) der Kommunikationsvorrichtung (10) lokalisiert wird; und Bereitstellen von Zugang zu dem exklusiv zugänglichen Informationsinhalt (22) für den Dienstleister, **gekennzeichnet durch** die Schritte:
- Einrichten eines Anfangsdatenpakets (40) von aufgezeichneten Informationen (41), umfassend Identifizierungsdaten von der sicheren Speicher-Teileinheit (20) und Daten zum Kontaktieren eines Steuerungspartners (50) der sicheren Speicher-Teileinheit (20) über ein Informationen weiterleitendes Netzwerk (70), sowie von zusätzlichen Informationen (42),
- Senden des Anfangsdatenpakets (40) von der Kommunikationsvorrichtung (10) zu dem Dienstleister (30), der Überwachung des Informationsinhalts ausführt;
- Überprüfung des Anfangsdatenpakets (40) bei dem Dienstleister (30), während dessen unter Verwendung des Anfangsdatenpakets (40) die Kontaktinformationen des Steuerungspartners (50) der gegebenen sicheren Speicher-Teileinheit (20) identifiziert wird,
- Einrichten eines Positionsanfrage-Datenpakets (60), aufweisend als Daten (61) die Identifizierungsdaten der gegebenen sicheren Speicher-Teileinheit (20)
- Senden eines Positionsanfrage-Datenpakets (60) von dem Dienstleiter zu dem Steuerungspartner (50) der gegebenen sicheren Speicher-Teileinheit (20) oder zu seinem Agenten (51) über das Informationen weiterleitende Netzwerk (70);
- Überprüfung des Positionsanfrage-Datenpakets (60), das bei dem Steuerungspartner (50) der gegebenen sicheren Speicher-Teileinheit (20) oder seinem Agenten (51) eintrifft, und Identifizieren der sicheren Speicher-Teileinheit (20),
- basierend auf der Identifizierung der sicheren Speicher-Teileinheit, Weiterleiten einer Gruppe von Anweisungen zu der Kommunikationsvorrichtung (10) über das Informationen weiterleitende Netzwerk (70) und dabei Installieren des exklusiv zugänglichen Informationsinhalts (22) in der gegebenen sicheren Speicher-Teileinheit (20), und
- Informieren des Dienstleisters (30) über das Installieren des exklusiv zugänglichen Informationsinhalts (22) und Senden eines Zugangs-Datenpakets (80) zu dem Dienstleister (30).

2. Verfahren nach Anspruch 1, **gekennzeichnet durch** Bestimmen der Kontaktinformationen des Steuerungspartners (50) der gegebenen sicheren Speicher-Teileinheit (20) direkt von dem Anfangsdatenpaket (40).

3. Verfahren nach Anspruch 1, **gekennzeichnet durch** Bestimmen der Kontaktinformationen des Steuerungspartners (50) der gegebenen sicheren Speicher-Teileinheit (20) von einer entfernten Datenbank unter Verwendung der Informationen, die in dem Anfangsdatenpaket (40) als eine Adresse erscheinen.

4. Verfahren nach einem der Ansprüche 1-3, **dadurch gekennzeichnet, dass** zusätzliche Informationen (42), die geeignet sind zur Identifizierung der Kommunikationsvorrichtung (10), die mit der sicheren Speicher-Teileinheit (20) und/oder dem Benutzer der Kommunikationsvorrichtung (10) und/oder dem Dienstleister (30) gekoppelt sind, in dem Anfangsdatenpaket (40) enthalten sind.

5. Verfahren zur Schaffung eines exklusiv zugänglichen Speicherbereichs (22) zum Lokalisieren von Informationsinhalt, angeordnet in einer sicheren Speicher-Teileinheit (20) einer Kommunikationsvorrichtung (10) mit einer Zentraleinheit (11) und der sicheren Speicher-Teileinheit (20), das Verfahren umfassend Ausführen von Datenaustausch mit einer anderen Partei mit der Hilfe von der Kommunikationsvorrichtung (10), als ein Ergebnis dessen ein neuer exklusiv zugänglicher Speicherbereich (22) in der sicheren Speicher-Teileinheit (20) der Kommunikationsvorrichtung (10) geschaffen wird; und Bereitstellen von Zugang zu dem exklusiv zugänglichen Speicherbereich (22) für die so zugelassene Partei, **gekennzeichnet durch** die Schritte:
- Einrichten eines Positionsanfrage-Datenpakets (60) von aufgezeichneten Informationen (41), geeignet zur Identifizierung der gegebenen sicheren Speicher-Teileinheit (20) und von zusätzlichen Informationen (42) für die Schaffung des exklusiv zugänglichen Speicherbereichs (22), der dazu dient, den Informationsinhalt zu empfangen, dann
- Senden des Positionsanfrage-Datenpakets (60) zu dem Steuerungspartner (50) der gegebenen sicheren Speicher-Teileinheit (20) oder zu seinem Agenten (51) über ein Informationen weiterleitendes Netzwerk (70), unter Verwendung von aufgezeichneten Informationen, die Daten zum Kontaktieren des Steuerungspartners (50) umfassen,
- Überprüfung des Positionsanfrage-Datenpakets (60) bei dem Steuerungspartner (50) oder seinem Agenten (51) und Identifizieren der sicheren Speicher-Teileinheit (20),
- basierend auf der Identifizierung der sicheren Speicher-Teileinheit, Weiterleiten einer Gruppe von Anweisungen zu der Kommunikationsvorrichtung (10) über das Informationen weiterleitende Netzwerk (70) und dabei Schaffen des exklusiv zugänglichen Speicherbereichs (22) in der gegebenen sicheren Speicher-Teileinheit (20),
- Informieren des Betreibers der portablen Kommunikationsvorrichtung (10) oder einer anderen Partei, die von dem Betreiber bestimmt wird, über die Schaffung des exklusiv zugänglichen Speicherbereichs (22), und Senden eines Zugangs-Datenpakets (80) zu dem Betreiber oder zu der anderen Partei.

6. Verfahren nach einem der Ansprüche 1-5, **gekennzeichnet dadurch, dass** der exklusiv zugängliche Informationsinhalt lokalisiert wird durch Schaffen eines exklusiv zugänglichen Speicherbereichs (22) und Einbeziehen, in das Positionsanfrage-Datenpakets (60), von Positionsdaten (62), die sich auf die Größe des exklusiv zugänglichen Speicherbereichs (22) beziehen, der geschaffen werden soll, und vorzugsweise von zusätzlichen Informationen (42), die geeignet sind zur Identifizierung der Kommunikationsvorrichtung (10) und/oder des Dienstleisters (30).

7. Verfahren nach Anspruch 6, **gekennzeichnet durch** Begrenzen - auf der Basis der Positionsdaten (62), die in dem Positionsanfrage-Datenpaket (60) erscheinen und sich auf die Größe des exklusiv zugänglichen Speicherbereichs (22) beziehen - eines exklusiv zugänglichen Speicherbereichs (22) auf die vorgeschriebene Größe in der sicheren Speicher-Teileinheit (20).

8. Verfahren nach Anspruch 1, wobei der exklusiv zugängliche Informationsinhalt lokalisiert wird durch Schaffen eines exklusiv zugänglichen Speicherbereichs (22) für die Lage des exklusiv zugänglichen Informationsinhalts.

9. Eines der Verfahren nach den Ansprüchen 1-8, **dadurch gekennzeichnet, dass** die aufgezeichneten Informationen (41) zumindest eine Zeichenfolge, die die gegebene sichere Speicher-Teileinheit (20) identifiziert, und/oder eine Zeichenfolge, die die Kommunikationsvorrichtung (10) identifiziert, und/oder eine Zeichenfolge, die zur Identifizierung des Steuerungspartners (50) verwendet werden kann, und/oder eine Zeichenfolge, die den Benutzer der Kommunikationsvorrichtung (10) identifiziert, aufweisen.

10. Eines der Verfahren nach den Ansprüchen 1-9, **dadurch gekennzeichnet, dass** die zusätzlichen Informationen (42) zumindest eine Zeichenfolge, die zur Identifizierung des Steuerungspartners (50) verwendet werden kann, und/oder eine Zeichenfolge, die den Benutzer der Kommunikationsvorrichtung (10) identifiziert, und/oder eine Zeichenfolge, die die Kommunikationsvorrichtung (10) identifiziert, und/oder eine Zeichenfolge, die die gegebene sichere Speicher-Teileinheit (20) identifiziert, aufweist.

11. Eines der Verfahren nach den Ansprüchen 1-10, **gekennzeichnet, durch** Verwenden eines Informationen weiterleitenden Netzwerks (70) für die Kommunikation, die mit dem Dienstleister (30), der Überprüfung des Informationsinhalts ausführt, und/oder mit dem Steuerungspartner (50) der gegebenen sicheren Speicher-Teileinheit (20) oder seinem Agenten (51) durchgeführt wird, und somit zum Weiterleiten des Anfangsdatenpakets (40) und/oder des Positionsanfrage-Datenpakets (60).

12. Eines der Verfahren nach den Ansprüchen 1-10, **dadurch gekennzeichnet, dass** Verwenden einer Schnittstelle (90), die direkte Datenkommunikation unterstützt, für die Kommunikation, die mit dem Dienstleister (30), der Überprüfung des Informationsinhalts ausführt, und/oder mit dem Steuerungspartner (50) der gegebenen sicheren Speicher-Teileinheit (20) oder seinem Agenten (51) durchgeführt wird, und somit zum Weiterleiten des Anfangsdatenpakets (40) und/oder des Positionsanfrage-Datenpakets (60).

13. Eines der Verfahren nach den Ansprüchen 1-12, **dadurch gekennzeichnet, dass** die Kontaktdaten bezüglich des Steuerungspartners (50), der zu der sicheren Speicher-Teileinheit (20) gehört, in der Informationsnetzwerk-Kennung gespeichert sind, die in der sicheren Speicher-Teileinheit (20) angeordnet ist.

14. Kommunikationsvorrichtung, die alle Schritte der Verfahren nach einem der Ansprüche 1 bis 13 beziehend auf die Kommunikationsvorrichtung umsetzt, die Kommunikationsvorrichtung (10) aufweisend eine Zentraleinheit (11) und eine sichere Speicher-Teileinheit (20), **dadurch gekennzeichnet, dass** aufgezeichnete Informationen (41) und zusätzliche Informationen (42) auf der Kommunikationsvorrichtung (10) gespeichert sind, wobei die aufgezeichneten Informationen (41) Daten umfassen, die geeignet sind zur Identifizierung der sicheren Speicher-Teileinheit (20), und Daten umfassen, zum Kontaktieren des Steuerungspartners (50) der gegebenen sicheren Speicher-Teileinheit (20) über ein Informationen weiterleitendes Netzwerk, und wobei die zusätzlichen Informationen (42) Daten umfassen zum Identifizieren der Kommunikationsvorrichtung (10), und wobei die Kommunikationsvorrichtung (10) ausgebildet ist, zum:
- Verwenden der aufgezeichneten Informationen (41) und der zusätzlichen Informationen (42) zum Schaffen eines Datenpakets (40, 60), und
- Senden des Datenpakets (40, 60) zu einer Adresse, ausgewählt aus der Gruppe, bestehend aus Dienstleister (30), Steuerungspartner (50) und seinem Agenten (51).

## Revendications

1. Procédé de positionnement d'un contenu d'information d'un fournisseur de services dans une unité partielle de stockage sécurisée (20) d'un dispositif de communication (10) ayant une unité centrale (11) et ladite unité partielle de stockage sécurisée (20) ; le procédé inclut réaliser un échange de données avec le fournisseur de services (30) avec l'aide du dispositif de communication comme résultat duquel un nouveau contenu d'information accessible de manière unique (22) est positionné dans l'unité partielle de stockage sécurisée (20) du dispositif de communication (10) ; et fournir un accès au contenu d'information accessible de manière unique (22) pour le fournisseur de services, **caractérisé par** les étapes de :
- mettre en place un paquet de données initial (40) à partir d'information enregistrée (41) comprenant des données d'identification de l'unité partielle de stockage sécurisée (20) et des données pour contacter un partenaire de contrôle (50) de l'unité partielle de stockage sécurisée (20) sur un réseau d'acheminement d'information (70) ainsi qu'à partir d'information supplémentaire (42),
- envoyer le paquet de données initial (40) à partir du dispositif de communication (10) au fournisseur de services (30) réalisant la supervision du contenu d'information ;
- examiner le paquet de données initial (40) au niveau du fournisseur de services (30), au cours duquel en utilisant le paquet de données initial (40) l'information de contact du partenaire de contrôle (50) de l'unité partielle de stockage sécurisée (20) donnée est identifiée,
- mettre en place un paquet de données de demande de position (60) incluant comme données (61) les données d'identification de l'unité partielle de stockage sécurisée (20) donnée
- envoyer un paquet de données de demande de position (60) à partir du fournisseur de services au partenaire de contrôle (50) de l'unité partielle de stockage sécurisée (20) donnée ou à son agent (51) sur le réseau d'acheminement d'information (70) ;
- examiner le paquet de données de demande de position (60) arrivant au partenaire de contrôle (50) de l'unité partielle de stockage sécurisée (20) donnée ou à son agent (51) et identifier l'unité partielle de stockage sécurisée (20),
- sur la base de l'identification de l'unité partielle de stockage sécurisée acheminer un groupe d'instructions vers le dispositif de communication (10) sur le réseau d'acheminement d'information (70) et installer ainsi le contenu d'information accessible de manière unique (22) dans l'unité partielle de stockage sécurisée (20) donnée, et
- informer le fournisseur de services (30) de l'installation du contenu d'information accessible de manière unique (22) et envoyer un paquet de données d'accès (80) au fournisseur de services (30).

2. Procédé selon la revendication 1, **caractérisé par** la détermination de l'information de contact du partenaire de contrôle (50) de l'unité partielle de stockage sécurisée (20) donnée directement à partir du paquet de données initial (40).

3. Procédé selon la revendication 1, **caractérisé par** la détermination de l'information de contact du partenaire de contrôle (50) de l'unité partielle de stockage sécurisée (20) donnée à partir d'une base de données distante en utilisant l'information apparaissant dans le paquet de données initial (40) comme adresse.

4. Procédé selon l'une quelconque des revendications 1 à 3, **caractérisé en ce que** l'information supplémentaire (42) adaptée pour l'identification du dispositif de communication (10) associé à l'unité partielle de stockage sécurisée (20) et/ou l'utilisateur du dispositif de communication (10) et/ou le fournisseur de services (30) est contenue dans le paquet de données initial (40).

5. Procédé pour l'établissement d'une zone de stockage accessible de manière unique (22) pour le positionnement de contenu d'information positionné dans une unité partielle de stockage sécurisée (20) d'un dispositif de communication (10) ayant une unité centrale (11) et ladite unité partielle de stockage sécurisée (20), le procédé incluant réaliser un échange de données avec une autre partie avec l'aide du dispositif de communication (10) comme résultat duquel une nouvelle zone de stockage accessible de manière unique (22) est créée dans l'unité partielle de stockage sécurisée (20) du dispositif de communication (10), et fournir l'accès à la zone de stockage accessible de manière unique (22) pour la partie ainsi autorisée, **caractérisé par** les étapes de :
- mettre en place un paquet de données de demande de position (60) à partir d'information enregistrée (41) adaptée pour l'identification de l'unité partielle de stockage sécurisée (20) donnée et à partir d'information supplémentaire (42) pour la création de la zone de stockage accessible de manière unique (22) servant à recevoir le contenu d'information, ensuite
- envoyer le paquet de données de demande de position (60) au partenaire de contrôle (50) de l'unité partielle de stockage sécurisée (20) donnée ou à son agent (51) sur un réseau d'acheminement d'information (70) en utilisant de l'information enregistrée comprenant des données pour contacter le partenaire de contrôle (50),
- examiner le paquet de données de demande de position (60) au niveau du partenaire de contrôle (50) ou au niveau de son agent (51) et identifier l'unité partielle de stockage sécurisée (20),
- sur la base de l'identification de l'unité partielle de stockage sécurisée acheminant un groupe d'instructions au dispositif de communication (10) sur le réseau d'acheminement d'information (70) et créer ainsi la zone de stockage accessible de manière unique (22) dans l'unité partielle de stockage sécurisée (20) donnée,
- informer l'opérateur du dispositif de communication portable (10) ou une autre partie déterminée par l'opérateur de la création de la zone de stockage accessible de manière unique (22), et envoyer à l'opérateur ou l'autre partie un paquet de données d'accès (80).

6. Procédé selon les revendications 1 à 5, **caractérisé en ce que** le contenu d'information accessible de manière unique est positionné en créant une zone de stockage accessible de manière unique (22) et inclut dans le paquet de données de demande de position (60) des données de position (62) concernant la taille de la zone de stockage accessible de manière unique (22) devant être créée et préférablement d'information supplémentaire (42) adaptée pour l'identification du dispositif de communication (10) et/ou du fournisseur de services (30).

7. Procédé selon la revendication 6, **caractérisé par** la délimitation - sur la base des données de position (62) apparaissant dans le paquet de données de demande de position (60) et concernant la taille de la zone de stockage accessible de manière unique (22) - d'une zone de stockage accessible de manière unique (22) de la taille prescrite dans l'unité partielle de stockage sécurisée (20).

8. Procédé selon la revendication 1, dans lequel le contenu d'information accessible de manière unique est positionné en créant une zone de stockage accessible de manière unique (22) pour le positionnement du contenu d'information accessible de manière unique.

9. L'un quelconque des procédés selon les revendications 1 à 8, **caractérisé en ce que** l'information enregistrée (41) inclut au moins une série de caractères identifiant l'unité partielle de stockage sécurisée (20) donnée et/ou une série de caractères identifiant le dispositif de communication (10) et/ou une série de caractères qui peut être utilisée pour l'identification du partenaire de contrôle (50) et/ou une série de caractères identifiant l'utilisateur du dispositif de communication (10).

10. L'un quelconque des procédés selon les revendications 1 à 9, **caractérisé en ce que** l'information supplémentaire (42) inclut au moins une série de caractères qui peut être utilisée pour l'identification du partenaire de contrôle (50) et/ou une série de caractères identifiant l'utilisateur du dispositif de communication (10), et/ou une série de caractères identifiant le dispositif de communication (10) et/ou une série de caractères identifiant l'unité partielle de stockage sécurisée (20) donnée.

11. L'un quelconque des procédés selon les revendications 1 à 10, **caractérisé par** l'utilisation d'un réseau d'acheminement d'information (70) pour la communication réalisée avec le fournisseur de services (30) réalisant la supervision du contenu d'information et/ou avec le partenaire de contrôle (50) de l'unité partielle de stockage sécurisée (20) donnée ou son agent (51), et donc pour l'acheminement du paquet de données initial (40) et/ou le paquet de données de demande de position (60).

12. L'un quelconque des procédés selon les revendications 1 à 10, **caractérisé par** l'utilisation d'une interface (90) supportant une communication de données directe pour la communication réalisée avec le fournisseur de services (30) réalisant la supervision du contenu d'information et/ou avec le partenaire de contrôle (50) de l'unité partielle de stockage sécurisée (20) donnée ou son agent (51), et donc pour l'acheminement du paquet de données initial (40) et/ou le paquet de données de demande de position (60).

13. L'un quelconque des procédés selon les revendications 1 à 12, **caractérisé en ce que** les données de contact concernant le partenaire de contrôle (50) appartenant à l'unité partielle de stockage sécurisée (20) sont stockées dans l'identifiant du réseau d'information positionné dans l'unité partielle de stockage sécurisée (20).

14. Dispositif de communication mettant en oeuvre toutes les étapes des procédés selon les revendications 1 à 13 concernant le dispositif de communication (10), le dispositif de communication (10) ayant une unité centrale (11) et une unité partielle de stockage sécurisée (20), **caractérisé en ce que** l'information enregistrée (41) et l'information supplémentaire (42) sont stockées dans le dispositif de communication (10), l'information enregistrée (41) comprenant des données adaptées pour l'identification de l'unité partielle de stockage sécurisée (20) et comprenant des données pour contacter le partenaire de contrôle (50) de l'unité partielle de stockage sécurisée (20) donnée sur un réseau d'acheminement d'information et l'information supplémentaire (42) comprenant des données pour identifier le dispositif de communication (10), et le dispositif de communication (10) est adapté pour :
- utiliser l'information enregistrée (41) et l'information supplémentaire (42) pour créer un paquet de données (40, 60), et
- envoyer le paquet de données (40, 60) à un destinataire choisi parmi dans le groupe constitué par le fournisseur de services (30), le partenaire de contrôle (50) et son agent (51).
